# EUROPÄISCHE PATENTANMELDUNG

(11) **EP 4 212 287 A1**
(43) Veröffentlichungstag der Anmeldung: **19.07.2023**
(21) Anmeldenummer: 22152022.4
(22) Anmeldetag: 18.01.2022
(51) Int. Cl.: B25J 9/16

(54) **PROJEKTIERUNG EINER SICHERHEITSGERICHTETEN ÜBERWACHUNG FÜR EINE MEHRACHSKINEMATIK MIT MEHREREN BEWEGLICHEN SEGMENTEN**

(71) Anmelder: Siemens Aktiengesellschaft, 80333 München (DE)
(72) Erfinder: Budday, Dominik, 91056 Erlangen (DE); Walter, Maximilian, 90408 Nürnberg (DE)
(74) Vertreter: Siemens Patent Attorneys

(57) **Zusammenfassung**

Die Erfindung betrifft ein Verfahren für eine Projektierung einer sicherheitsgerichteten Überwachung für eine Mehrachskinematik mit mehreren beweglichen Segmenten, aufweisend die Schritte des Zuordnens mehrerer jeweiliger Segment-Kinematikzonen zu jeweils einem oder mehreren Segmenten der Mehrachskinematik, wobei die jeweiligen Segment-Kinematikzonen durch Segment-Hüllkörper in Abhängigkeit von den jeweiligen Segmenten gebildet werden, des Bereitstellens jeweiliger Bewegungen der jeweiligen Segmente im kartesischen Raum, des Erfassens von aufgrund der bereitgestellten jeweiligen Bewegungen zu durchlaufenden Raumelementen je Segment, des Ermittelns jeweiliger Gesamt-Hüllkörper als jeweilige Segment-Arbeitszonen je Segment basierend auf den erfassten zu durchlaufenden Raumelementen, und des Bereitstellens der jeweiligen Segment-Arbeitszonen für die Projektierung einer Sicherheitsfunktion der sicherheitsgerichteten Überwachung. Die Erfindung betrifft ferner eine zugehörige Einrichtungskomponente und eine sicherheitsgerichtete Steuerung zum sicheren Betreiben einer Mehrachskinematik aufweisend einen nach dem Verfahren projektierten Sicherheitsfunktionsblock.

## Beschreibung

Die Erfindung betrifft ein Verfahren für eine Projektierung einer sicherheitsgerichteten Überwachung für eine Mehrachskinematik mit mehreren beweglichen Segmenten sowie eine Einrichtungskomponente und eine sicherheitsgerichtete Steuerung.

Eine moderne, flexible Arbeitsraumüberwachung erlaubt die sichere und gleichzeitig flexible Realisierung von automatisierten, schutzzaunlosen Produktions- und Handlingsabläufen. Dafür sollten Arbeitsräume möglichst passgenau zugeschnitten auf die eingesetzte Kinematik sowie die Umgebung vorgegeben werden. Ein Arbeitsraum wird derart überwacht, dass Bestandteile der Kinematik daraufhin überwacht werden, dass sie den Arbeitsraum nicht verlassen. Die Modellierung der Arbeitsräume für die sichere Überwachung obliegt typischerweise dem Anwender, der manuell Arbeitszonen für die Bewegungsüberwachung festlegen muss. Die hohe Komplexität dieser Aufgabe führt meist zu einer stark vereinfachen Modellierung mit einer großen, umfassenden Arbeitszone für die gesamte Kinematik in allen möglichen Stellungen mit unnötigem, kostspieligem Flächen- und Volumenverbrauch. Bislang werden solche unnötig großen Arbeitszonen durch eine Vielzahl an Schutzzonen ergänzt, die wiederum Bereiche innerhalb der Arbeitszone angeben, in welche die Kinematik nicht eindringen darf.

Vor diesem Hintergrund ist es eine Aufgabe der vorliegenden Erfindung eine verfeinerte Arbeitsraumüberwachung vereinfacht bereitzustellen. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren für eine Projektierung einer sicherheitsgerichteten Überwachung für eine Mehrachskinematik mit mehreren beweglichen Segmenten, aufweisend die Schritte des Zuordnens mehrerer jeweiliger Segment-Kinematikzonen zu jeweils einem oder mehreren Segmenten der Mehrachskinematik, wobei die jeweiligen Segment-Kinematikzonen durch Segment-Hüllkörper in Abhängigkeit von den jeweiligen Segmenten gebildet werden, des Bereitstellens jeweiliger Bewegungen der jeweiligen Segmente im kartesischen Raum, des Erfassens von aufgrund der bereitgestellten jeweiligen Bewegungen zu durchlaufenden Raumelementen je Segment, des Ermittelns jeweiliger Gesamt-Hüllkörper als jeweilige Segment-Arbeitszonen je Segment basierend auf den erfassten zu durchlaufenden Raumelementen, und des Bereitstellens der jeweiligen Segment-Arbeitszonen für die Projektierung einer Sicherheitsfunktion der sicherheitsgerichteten Überwachung.

Bei einer Projektierung einer sicherheitsgerichteten Überwachung wird die Überwachung einer Mehrachskinematik eingerichtet und für den späteren sicheren Betrieb der Mehrachskinematik vorbereitet. Die Mehrachskinematik weist mehrere bewegliche Segmente auf. Beispielsweise sind mehrere Achsen vorgesehen, die jeweils ein Segment ansteuern. Beispielsweise ist die Mehrachskinematik ein Knickarmroboter mit mehreren Gliedern und einem Endeffektor, an dem ein Werkzeug angebracht ist. Beispielsweise wird die Mehrachskinematik für das Umlagern von Gütern oder die Bearbeitung von Werkstücken oder das Montieren von Komponenten eingesetzt.

Für die Projektierung der Sicherheitsfunktion werden Arbeitszonen bereitgestellt. Die sicherheitsgerichtete Überwachung basiert auf einer rechnerischen Überprüfung daraufhin, ob Teile der Mehrachskinematik die Arbeitszone verlassen. Bei der vorgeschlagenen Lösung wird überprüft, ob ein jeweiliges Segment eine jeweilige zugehörige Segment-Arbeitszone verlässt. Es werden vorteilhafterweise somit bei der Prüfung die einzelnen Segmente separat geprüft und es werden die einzelnen Segmente auf ein Verlassen der jeweils zugehörigen Segment-Arbeitszone hin überprüft. Es wird somit nicht eine generelle Arbeitszone festgelegt, sondern für die Überwachung jedes einzelnen Segments wird überprüft, ob das jeweilige einzelne Segment die jeweils zugehörige Arbeitszone verlässt. Dafür wird die zugehörige Segment-Arbeitszone je Segment bestimmt.

Die jeweiligen Segment-Arbeitszonen definieren somit je Segment den Raum, in dem sich die zugehörigen Segment-Kinematikzonen vollständig aufhalten müssen.

Bei der Segment-Arbeitszone handelt sich dabei vorteilhafterweise um einen geometrischen Körper, der sich im kartesischen Raum über alle diejenigen Raumbereiche erstreckt, die das jeweilige Segment im Verlauf einer Bewegung durchqueren oder durchfahren soll. Sie bildet einen Gesamt-Hüllkörper über alle zu durchlaufenden Raumelemente. Die Raumelemente sind beispielsweise Bereiche innerhalb des kartesischen Raums, in dem sich die Mehrachskinematik bewegt, in welche das betreffende Segment zumindest teilweise während der Bewegung der Mehrachskinematik eindringt. Die Summation über alle durchfahrenen Raumelemente je Segment bildet die Grundlage für die Ermittlung des Gesamt-Hüllkörpers, der diese Raumelemente umfasst.

Bei der Segment-Arbeitszone kann es sich um eine in Hinblick auf ihre Dimension statische Zone handeln. Ebenso ist es möglich, aktuelle Geschwindigkeiten oder Nachlaufwege der Kinematik zu berücksichtigen und die Segment-Arbeitszone in ihrer Dimension veränderlich zu projektieren. Auch in Hinblick auf die Position und/ oder Orientierung kann die Segment-Arbeitszone beispielsweise in einem raumfesten Koordinatensystem festgelegt werden und sich nicht mit der Kinematik mitbewegen. Ebenso kann die Pose der Segment-Arbeitszone zeitlich veränderlich projektiert werden oder in der sicheren Kollisionsüberwachung dynamisch berücksichtigt werden.

Die zu durchlaufenden Raumelemente werden derart bestimmt, dass für ein Segment ein Segment-Hüllkörper bestimmt wird. Ein Segment-Hüllkörper wird beispielsweise passend zur Geometrie des Segments gewählt, beispielsweise als Quader oder als Zylinder oder als Kugel. Der Segment-Hüllkörper umfasst das jeweilige Segment vollständig. Beispielsweise bilden eine Achse mit ihren Gelenken die Basis für den Segment-Hüllkörper. Der Segment-Hüllkörper ist insbesondere in alle Raumrichtungen vergrößert gegenüber dem Segment selbst ausgebildet und beinhaltet somit auch gewisse Unschärfen in der Ausdehnung der Kinematik aufgrund von Messungenauigkeiten oder Verzögerungen.

Der Segment-Hüllkörper bildet je Segment eine Segment-Kinematikzonen, die sich abhängig von der vorgesehenen Bewegung der Mehrachskinematik im Raum bewegt. Dabei durchfährt eine jeweilige Segment-Kinematikzone verschiedene Raumelemente. Position und Orientierung der Segment-Kinematikzonen sind somit dynamisch, abhängig von der Dynamik der Segmente. Beispielsweise wird die Bewegung eines jeweiligen Segments im Raum mittels einer Rückwärtstransformation bei Vorgabe einer Solltrajektorie des Endeffektors der Mehrachskinematik berechnet. Die Dimension der Segment-Kinematikzonen sind beispielsweise veränderliche projektiert und berücksichtigen aktuelle Geschwindigkeiten oder Nachlaufwege der Kinematik. Die Größe der Segment-Kinematikzonen kann somit abhängig von den Abmessungen der Segmente sowie weiteren Parametern wie Geschwindigkeit oder Beschleunigung ausfallen. Diese Parameter vergrößern die Segment-Kinematikzone insbesondere unterschiedlich stark über die durch die Abmessungen der Segmente geforderten Werte hinaus.

Die Raumelemente unterteilen den Raum in mehrere, vorzugsweise gleich ausgestaltete, Elemente. Vorzugsweise unterteilen sie den vollständigen potentiell befahrbaren kartesischen Raum in der Umgebung der Mehrachskinematik. Beispielsweise werden die Raumelemente vorab festgelegt. Beispielsweise sind die Raumelemente Voxel, die den kartesischen Raum vollständig und ohne Überlappungen ausfüllen.

Die vorgeschlagene segmentierte Modellierung des Arbeitsraums kann weitaus kompakter ausfallen, als es eine alleinige Zone für die gesamte Kinematik erlaubt. Dies ermöglicht eine Platzeinsparung. Zudem wird vorteilhaft eine Einschränkung auf eine explizite Vorgabe einer einzelnen Trajektorie vermieden, sodass auch eine flexiblere Bewegung der Kinematik realisiert werden kann. Der Anwender kann eine einzelne oder aber auch beliebig viele Trajektorien kombinieren und daraus die resultierenden segmentierten Arbeitszonen ermitteln.

Zudem wird vorteilhaft nicht nur die Bahn eines Tool Center Points, kurz TCPs, oder eines Endeffektors betrachtet, sondern die gesamte Kinematik, insbesondere mit allen beweglichen Segmenten, sodass die Sicherheit an einer Anlage mit der Mehrachskinematik stets gewährleistet ist.

Der Gesamt-Hüllkörper wird dabei derart gewählt, dass er alle zu durchfahrenden Raumelemente umfasst und zugleich möglichst klein ist, d.h. möglichst wenig Raum als Arbeitszone deklariert. Somit muss vorteilhafterweise für ein Segment nur ein relativ kleiner Arbeitsraum überwacht werden. Eine solche Safety-Überwachung ist mit relativ geringem Rechenaufwand verbunden. Die Segment- und Bewegungs-spezifisch erstellte Segment-Arbeitszone ist auf die Bewegung des jeweiligen Segments ausgerichtet ausgestaltet. Infolgedessen müssen weniger Schutzzonen eingerichtet werden, die den Arbeitsraum einschränken. Je kleiner die Arbeitszone ist, desto weniger wahrscheinlich ist es, dass für ein konkretes Anwendungsszenario zusätzlich Schutzzonen vorgegeben werden müssen bzw. desto weniger Schutzzonen sind nötig. Dies führt zu einem erheblich kleineren Rechenaufwand.

Mit jeder zusätzlichen Schutzzone muss herkömmlicherweise jedes Segment auf ein Eindringen in die Schutzzone hin überprüft werden. Eine Schutzzone weniger führt somit zu einer Ersparnis von m Prüfungen bei m Segmenten. Da mit dem vorgeschlagenen Verfahren statt einer großen Arbeitszone für die mehreren Segmente und mehreren Schutzzonen ebenfalls für die mehreren Segmente vorteilhafterweise jeweilige Arbeitszonen je einzelnem Segment und insgesamt weniger Schutzzonen für die mehreren Segmente vorgesehen sind, müssen insgesamt weniger Prüfungen durchgeführt werden.

Die Überwachung von Arbeits- und Schutzzonen mit einer unnötig großen Anzahl *n* an Schutzzonen und damit verbundene Performance-Einbußen können vorteilhaft vermieden werden, da die Algorithmen zur Kollisionsprüfung von Komplexität **O**(*n*²) sind. Somit ergibt sich ein Performance-Gewinn, da durch die flexible Arbeitsraum-Modellierung oft weniger Schutzzonen benötigt werden. Da herkömmlicherweise verwendete zusätzliche Schutzzonen gleichermaßen für alle Segmente zu prüfen sind, gehen sie quadratisch in den Rechenaufwand mit ein. Da es jedoch eine eindeutige Zuordnung zwischen Segmenten mit zugehöriger Segment-Kinematikzone und zugehöriger segmentierter Arbeitszone gibt, ist dieser Aufwand bei einer zusätzlichen Segment-Arbeitszone nur linear.

Zudem verursacht die Prüfung auf ein Verlassen eines Arbeitsraums weniger Rechenaufwand als die Überprüfung auf ein Überlappen mit einer Schutzzone.

Beispielsweise wird die Mehrachskinematik mit der projektierten sicherheitsgerichteten Überwachung betrieben und überprüft im laufenden Betrieb die Segmente auf ein Verlassen der jeweiligen segment-spezifischen Segment-Arbeitszone.

[c 2] Gemäß einer Ausgestaltung werden die jeweiligen Bewegungen der jeweiligen Segmente im kartesischen Raum mittels einer oder mehrerer Trajektorien, die eine Sollbewegung der Mehrachskinematik oder eine Istbewegung der Mehrachskinematik bei einer realen Testfahrt unter gesicherten Bedingungen darstellen, bereitgestellt. Beispielsweise werden eine Sollbewegung der Mehrachskinematik mittels einer Trajektorie des Endeffektors angegeben und aus dieser die Stellungen der Gelenke und damit die Positionen der einzelnen Segmente über den Bewegungsablauf hinweg betrachtet mittels einer Rückwärtstransformation berechnet. Aus den Positionen oder Ausrichtungen der Segmente wird ermittelt, welche Raumelemente von einem jeweiligen Segment-Hüllkörper durchfahren werden. Ferner können mehrere Trajektorien des Endeffektors für mehrere verschiedene Bewegungsabläufe vorgegeben werden, die alle für die Einrichtung der Bewegungsüberwachung berücksichtigt werden sollen. Überdies ist es ebenso möglich, die Sollbewegung der Mehrachskinematik mittels Trajektorien anzugeben, die die Bewegung der einzelnen Segmente direkt beschreiben. Dies kann vorteilhaft sein, wenn die Kinematik beispielsweise Hindernissen ausweichen muss, die man alleine durch Vorgabe der TCP -Bahn nicht explizit umfährt oder sobald die Kinematik kinematisch unterbestimmt ist, d.h. keine eindeutige Zuordnung von Vorwärts- und Rückwärtstrafo vorhanden ist, z.B. bei > 6 DOFs, beispielsweise ein 6-Achser auf einer Linearschiene.

Gemäß einer Ausgestaltung wird der jeweilige Gesamt-Hüllkörper mittels eines Optimierungsverfahrens in Abhängigkeit von den erfassten zu durchlaufenden Raumelementen ermittelt. Das Optimierungsverfahren setzt dabei beispielsweise einen Optimierungsalgorithmus ein, der das Gesamt-Volumen des Gesamt-Hüllkörpers minimiert. Somit steht dem Anwender ein segmentiertes und optimiertes Modell des benötigten Arbeitsraums zur Verfügung, das den Raum optimal ausnutzt und abdeckt. Durch diese Optimierung wird Platz bei der Bereitstellung der Arbeitsumgebung für die Mehrachskinematik eingespart und die Bewegungsüberwachung in Hinblick auf die benötigte Rechenleistung oder Performance optimiert. Die Platzeinsparung kann insbesondere bei der Planung mehrerer nebeneinander oder miteinander arbeitender Kinematiken ausgenutzt werden, beispielsweise durch explizite Anordnung der beiden Kinematiken.

Der Gesamt-Hüllkörper wird insbesondere als konvexer und minimaler geometrischer Körper ausgestaltet. Insbesondere werden für den Gesamt-Hüllkörper fest vorgegebene geometrische Körper verwendet, die in ihren Abmessungen in Abhängigkeit von den durchlaufenen Raumelementen optimiert werden.

Gemäß einer Ausgestaltung werden die zu durchlaufenden Raumelemente mittels eines Spatial-Hashing-Verfahrens erfasst. Somit wird für jede der vorgesehenen Segment-Kinematikzonen der von ihr durchlaufene dreidimensionale Raum erfasst. Je feiner der kartesische Raum mittels sogenannter Gitterzellen in einem Spatial-Hashing-Verfahren unterteilt wird, d.h. je kleiner die Raumelemente gewählt werden, desto genauer wird die Arbeitszone an die tatsächlich vorgesehene Bewegung der Segmente bzw. ihrer Segment-Kinematikzonen angepasst. Das vorgeschlagene Verfahren ermöglicht auch für große Datenmengen eine effiziente Erfassung von in einem dreidimensionalen Raum durchlaufenen Gitterzellen mittels eines Kollisionsberechnungs-Algorithmus zwischen Segment-Kinematikzonen und Gitterzellen.

Gemäß einer Ausgestaltung werden die zu durchlaufenden Raumelemente mittels einer topologischen Karte oder mittels Punktewolken oder mittels einer Voxel-Karte erfasst. Somit werden die für die Arbeitszonen und damit für die Arbeitsraumüberwachung zu berücksichtigenden Bereiche oder Zonen ermittelt und beispielsweise zusätzlich gespeichert. Hierbei kommen beispielsweise Kollisions-Berechnungs-Verfahren zwischen den Segment-Kinematikzonen und den Raumelementen zum Einsatz. Die topologische Karte oder die Punktewolken oder die Voxel-Karte lassen sich zudem vorteilhafterweise zur Anzeige bringen, beispielsweise in einer Einricht- oder Test-Phase und mittels eines Bildschirms visualisiert.

Gemäß einer Ausgestaltung werden die Segment-Hüllkörper durch vorgegebene geometrische Objekte, insbesondere durch Kugeln, Quader oder Kapseln, gebildet. Beispielsweise werden die Segment-Hüllkörper abhängig von der Geometrie der Segmente gebildet und aus einer vorgegebenen Reihe von geometrischen Formen ausgewählt. Beispielsweise gibt ein Anwender die Daten der Mehrachskinematik mit den Abmessungen der Segmente ein und ein Einrichtprogramm ermittelt abhängig von den Abmessungen und einem gewählten geometrischen Objekt den Segment-Hüllkörper automatisch. Somit werden die Segment-Kinematikzonen angepasst an die spezifische Mehrachskinematik einfach und automatisch erstellt.

Gemäß einer Ausgestaltung wird ein gemeinsamer Gesamt-Hüllkörper als gemeinsame Segment-Arbeitszone für mehrere verschiedene Segmente basierend auf den erfassten zu durchlaufenden Raumelementen der mehreren verschiedenen Segmente bzw. deren Segment-Kinematikzonen ermittelt. Beispielsweise können Segmente vorteilhaft zusammengefasst werden, wenn dadurch eine gemeinsame Segment-Arbeitszone entsteht, die in ihren Abmessungen der Überlagerung von zwei separaten Segment-Arbeitszonen weitgehend entspricht oder wenn ein potentiell von der gemeinsamen Segment-Arbeitszone auszusparender Bereich beispielsweise in einer Produktionszelle nicht anderweitig genutzt werden kann. Insbesondere nah an der Basis oder dem Fuß einer Mehrachskinematik lassen sich Segmente sinnvoll zusammenfassen für die Berechnung einer gemeinsamen Arbeitszone. Die zusammengefassten Segmente werden dann jeweils auf ein Verlassen der gemeinsamen Arbeitszone hin überprüft.

Gemäß einer Ausgestaltung wird die jeweilige Segment-Arbeitszone für eine festgelegte Zeitspanne oder einen festgelegten Bewegungsabschnitt eines Bewegungsablaufs des Mehrachskinematik ermittelt. Somit können die Segment-Arbeitszonen über die Zeit veränderlich ermittelt werden. Bei einer zeitlich versetzten Betrachtung wird beispielsweise zunächst eine als Segment-Arbeitszone ermittelte Kugel in einem Zeitraum t0 bis t1 als erste Arbeitszone für die Arbeitsraumüberwachung verwendet, in einem darauffolgenden Zeitraum t1 bis t2 ist ein als Segment-Arbeitszone ermittelter Quader als zweite Arbeitszone aktiviert. Zu jedem Zeitpunkt oder in jedem Zeitraum ist dabei jeder Segment-Kinematikzone eine Segment-Arbeitszone zugeordnet. Damit können Anwenderszenarien vorteilhaft beachtet werden, bei denen eine Kinematik sehr unterschiedliche Bewegungen durchführt und in zeitlicher Abfolge verschiedene Arbeitszonen eingesetzt werden sollen, um jeweils unterschiedliche Räume innerhalb der Produktions- oder Bearbeitungszelle freigeben zu können oder anderweitig nutzen zu können, beispielsweise für Übergabebereiche oder für Zutritt durch Nutzer.

Gemäß einer Ausgestaltung werden der Trajektorie oder den Trajektorien Bremswege oder Nachlaufwege zugeordnet und/ oder die zu durchlaufenden Raumelemente je Segment unter zusätzlicher Berücksichtigung von Bremswegen oder Nachlaufwegen erfasst. Dabei werden die Brems- oder Nachlaufwege beispielsweise derart berücksichtigt, dass die Segment-Kinematikzonen ausgedehnt werden, damit auch im Falle eines Bremsvorganges und damit verbundenen Verzögerungen die Segmente die Arbeitszone nicht verlassen. Die Brems- oder Nachlaufwege werden beispielsweise mittels einer Physik-Simulation oder mit Hilfe von Fehlerberechnungsverfahren ermittelt. Die Segment-Arbeitszone wird dann entsprechend unter Berücksichtigung der erweiterten Segment-Kinematikzonen ermittelt.

Gemäß einer Ausgestaltung werden die für die Projektierung bereitgestellten jeweiligen Segment-Arbeitszonen durch die Sicherheitsfunktion aktiviert. Beispielsweise werden die Segment-Arbeitszonen in der Einrichtphase ermittelt und anschließend in einer Testphase sowie in der darauffolgenden Betriebsphase der Mehrachskinematik aktiviert. Die Sicherheitsfunktion aktiviert dabei beispielsweise die Segment-Arbeitszonen je Segment gleichzeitig, sobald ein Bewegungsablauf startet oder sobald die Kinematik in einem Betriebsmodus ist oder sobald eine Stromversorgung für die Mehrachskinematik besteht.

Gemäß einer Ausgestaltung werden die für die Projektierung bereitgestellten jeweiligen Segment-Arbeitszonen je Zeitspanne oder je Bewegungsabschnitt durch die Sicherheitsfunktion aktiviert. Beispielsweise werden somit für alle oder für ausgewählte Segmente über die Zeit verschiedene Segment-Arbeitszonen für die Bewegungsüberwachung aktiviert. Die Aktivierung einer jeweiligen Segment-Arbeitszone erfolgt durch die Sicherheitsfunktion beispielsweise zeitgesteuert, wobei eine Zeitbasis der Bewegungssteuerung verwendet wird, oder getriggert durch einen von der sicheren Bewegungssteuerung oder einem sicheren Sensor bereitgestellten Positions- oder anderweitig informativem Sensorwert erfolgt.

Gemäß einer Ausgestaltung werden für die Projektierung der sicherheitsgerichteten Überwachung zusätzlich Schutzzonen vorgegeben, die die Segment-Arbeitszonen einschränken. Dabei werden beispielsweise Schutzzonen für den kartesischen Raum vergeben, die für alle Segment-Arbeitszonen gleichermaßen gelten. Beispielsweise definieren die Schutzzonen Räume, in die die Segment-Kinematikzonen nicht eindringen dürfen. Beispielsweise sind die Schutzzonen permanent aktiviert oder zu bestimmten Zeitspannen oder für bestimmte Bewegungsabschnitte. Eine Schutzzone wird beispielsweise durch einen Übergabebereich gebildet, in den die Kinematik nicht eindringen soll, da dort die Kollision mit menschlichen Nutzern nicht ausgeschlossen werden kann. Beispielsweise werden auch durch Bereiche in der Arbeitsumgebung, in der sich Schaltschränke oder ähnliche Einrichtungen befinden, Schutzzonen vorgegeben.

Die Erfindung betrifft ferner eine Einrichtungskomponente zur Projektierung einer sicherheitsgerichteten Überwachung für eine Mehrachskinematik, aufweisend Eingabe- und Bedienmittel zum Zuordnen mehrerer jeweiliger Segment-Kinematikzonen zu jeweils einem oder mehreren Segmenten der Mehrachskinematik, wobei die jeweiligen Segment-Kinematikzonen durch Segment-Hüllkörper in Abhängigkeit von den jeweiligen Segmenten gebildet werden, und zum Bereitstellen jeweiliger Bewegungen der jeweiligen Segmente im kartesischen Raum, sowie eine Berechnungseinheit zum Erfassen von aufgrund der bereitgestellten jeweiligen Bewegungen zu durchlaufenden Raumelementen je Segment und zum Ermitteln jeweiliger Gesamt-Hüllkörper als jeweilige Segment-Arbeitszone je Segment basierend auf den erfassten zu durchlaufenden Raumelementen, sowie Ausgabemittel zum Bereitstellen der jeweiligen Segment-Arbeitszonen für die Projektierung einer Sicherheitsfunktion der sicherheitsgerichteten Überwachung.

Somit wird einem Nutzer mit der Einrichtungskomponente ein umfassendes Tool bereitgestellt, mit dem sicherheitsgerichtete Bewegungssteuerungen einfach und zugeschnitten auf eine konkrete Mehrachskinematik und deren Bewegungen im Raum eingerichtet werden können. Die Einrichtung erfolgt vorzugsweise in einer Inbetriebnahme- oder Einricht- oder Testphase einer Sicherheitsfunktion der sicherheitsgerichteten Überwachung oder in einer Inbetriebnahme- oder Einricht- oder Testphase der sicherheitsgerichteten Bewegungssteuerung insgesamt.

Beispielsweise wird die Einrichtungskomponente als Teil einer Safety-Komponente mit darauf implementiertem Sicherheitsfunktionsblock ausgestaltet. Die Funktionen der Einrichtungskomponenten erweitern beispielsweise die Funktionen des Sicherheitsfunktionsblocks.

Die Eingabe- und Bedienmittel und die Ausgabemittel sowie die Berechnungseinheit können in Software, Hardware oder in einer Kombination aus Soft- und Hardware realisiert und ausgeführt werden. So können die durch die Einrichtungskomponente und insbesondere die Berechnungseinheit realisierten Schritte als Programm-Code auf einem Speichermedium, insbesondere einer Festplatte, CR-ROM oder einem Speichermodul abgelegt sein, wobei die einzelnen Anweisungen des Programmcodes von mindestens einer Recheneinheit, umfassend einen Prozessor, ausgelesen und verarbeitet werden.

Gemäß einer Ausgestaltung umfassen die Ausgabemittel ferner eine Visualisierungseinheit zur Darstellung der Segment-Arbeitszonen. Beispielsweise werden ferner auch die durchlaufenen Voxel oder Raumelemente zur Anzeige gebracht, sowie insbesondere auch vorgesehene Trajektorien oder die Segment-Kinematikzonen der Segmente.

Die Erfindung betrifft ferner eine sicherheitsgerichtete Steuerung zum sicheren Betreiben einer Mehrachskinematik, aufweisend einen Sicherheitsfunktionsblock, wobei der Sicherheitsfunktionsblock gemäß einem der oben beschriebenen Verfahren projektiert ist. Beispielsweise wird der Sicherheitsfunktionsblock während der Inbetriebnahme- oder Einricht- oder Testphase projektiert, um im darauffolgenden Betrieb die oben beschriebenen Segment-Arbeitszonen einzusetzen.

Die Erfindung wird nachfolgend anhand von Ausführungsbeispielen mit Hilfe der Figuren näher erläutert. Es zeigen:
- Figur 1: eine schematische Darstellung einer Mehrachskinematik zur Veranschaulichung von Segment-Kinematikzonen gemäß einem ersten Ausführungsbeispiel der Erfindung;
- Figur 2: eine schematische Darstellung einer Mehrachskinematik zur Veranschaulichung von Segment-Arbeitszonen gemäß dem ersten Ausführungsbeispiel;
- Figur 3: eine schematische Darstellung zur Veranschaulichung einer Voxel-Karte gemäß einem zweiten Ausführungsbeispiel der Erfindung.

In den Figuren sind funktionsgleiche Elemente mit denselben Bezugszeichen versehen, sofern nichts anderes angegeben ist.

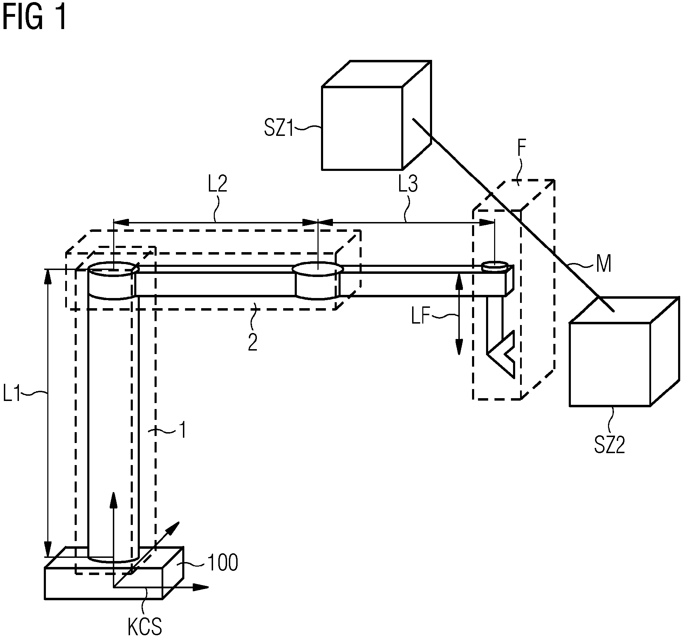

In Figur 1 ist als Mehrachskinematik eine SCARA Kinematik 100 gezeigt, wie sie in vielfältigen industriellen Anwendungen zur Montage von Bauteilen, Handling von Komponenten oder Bearbeitung von Werkstücken zum Einsatz kommt. Es handelt sich beispielsweise um eine SCARA Kinematik 100 mit einer Hubachse am Flansch und Geometrien wie in der Figur 1 erkennbar. Die Abmaße liegen für das erste Segment L1 bei L1 = 500, für das zweite Segment L2 bei L2 = 2000, für das dritte Segment L3 bei L3 = 1000 und für das Flansch-Segment LF bei LF = 200. Die Kinematik 100 soll gemäß dem ersten Ausführungsbeispiel dazu eingesetzt werden, eine Glasplatte an einer Übergabestelle mithilfe eines Sauggreifers am Flansch aufzunehmen und an eine andere Übergabestelle zu transportieren.

Der Anwender modelliert die SCARA Kinematik 100 in seinem Bewegungsprogramm sowie in seinem Safety-Programm, welches um eine Einrichtungskomponente zur Projektierung einer sicherheitsgerichteten Überwachung der Bewegung gemäß dem ersten Ausführungsbeispiel ergänzt ist. Hier werden auch die zugehörigen Segment-Kinematikzonen 1, 2, F modelliert, sodass alle für das Anwendungsszenario relevanten Segmente umschlossen sind. Im Beispiel sind dies das Segment L1, das Segment L2, das Flanschsegment LF, sowie die zugehörige Glasplatte als Werkstück (Glasplatte nicht abgebildet). Für das Segment L3 hält der Anwender in diesem Beispiel keine zusätzliche Überwachung für notwendig, da es zwischen dem Segment L2 und dem Flanschsegment LF eingespannt und bei Vorgabe des Tool Center Points TCP als der Punkt, von dem ausgehend die Dimension, Position/Orientierung beschrieben wird, also der Ursprung des Tool-Koordinatensystems, nicht frei beweglich ist. Beispielsweise sind die Werte zu den Segmenten direkt aus einem CAD Programm abrufbar hinterlegt.

Die Segment-Kinematikzonen 1, 2, F basieren beispielsweise auf Quadern als geometrische Grundkörper und werden automatisch anhand der Angaben zu den Abmessungen der Segmente gebildet. Dabei werden die Segment-Kinematikzonen so vergrößert, dass Messfehler und Verzögerungszeiten berücksichtigt werden, um auch in einem Worst-Case-Szenario zu verhindern, dass sich Teile der Segmente außerhalb einer noch festzulegenden Arbeitszone oder innerhalb einer ebenfalls noch festzulegenden Schutzzone aufhalten.

Zudem gibt der Anwender bereits bekannte Schutzzonen SZ1, SZ2 vor, die durch die beiden Übergabestellen zur Aufnahme und Ablage der Glasplatte gebildet werden. In diese Schutzzonen SZ1, SZ2 darf die Kinematik 100 nicht eindringen, d.h. es muss rechtzeitig unter Berücksichtigung der Segment-Kinematikzonen ein Stopp-Vorgang eingeleitet werden.

Der Anwender gibt eine oder mehrere Bewegungen der Kinematik 100 vor, welche er in seiner Bewegungsplanung ermittelt hat. Hier hat er einen geeigneten Bewegungsablauf M einer räumlichen Geraden festgelegt. Das Werkstück, also die Glasplatte, soll hier aerodynamisch parallel zur TCP-Bewegung ausgerichtet sein, wobei für die Zonendimensionierung Schwankungen zu berücksichtigen sind. Der Anwender spezifiziert für die Segment-Kinematikzonen Kugeln und Quader als erlaubte Hüllkörper.

Der gesamte Raum der Arbeitszelle, in der sich die SCARA Kineamtik 100 befindet, wird in Abhängigkeit von der Dimension der Kinematik und der zeitlichen Auflösung diskretisiert und in kleine Voxel unterteilt. Dabei wird mittels eines Spatial Hashing-Verfahrens ein räumliches Gitter erzeugt.

Anschließend wird für jede relevante Segment-Kinematikzone 1, 2, F eine Voxelkarte erstellt, welche den erfassten Raum separiert für jede Segment-Kinematikzone während des Bewegungsablaufs beschreibt. Es werden entsprechend eine Voxelkarte für die Segment-Kinematikzone 1 erstellt, die aufgrund der auf die Drehung um die eigene Achse beschränkten Dynamik des ersten Segments L1 entsprechend der im Ruhemodus bereits abgedeckten Voxel ausfällt. Die Voxelkarte für das zweite Segment L2 hingegen hängt von der Bewegungsplanung für das Werkstück ab, die sich in einer Rückwärtstransformation aus dem vorgegebenen Bewegungsablauf M des Werkstücks für das zweite Segment ergibt. Die überstrichenen Voxel erstrecken sich beispielweise in einer Ebene der zweiten Segments L2 im kartesischen Koordinatensystem KCS soweit, wie eine Auslenkung des äußeren Gelenks des zweiten Segments L2 notwendig ist.

Für das Flanschsegment ist die Voxelkarte komplexer und abhängig von der Hubbewegung des Flanschsegments LF einerseits sowie der Drehbewegung am Flanschgelenk andererseits zur aerodynamischen Ausrichtung der Glasplatte und deren anschließendem Verfahrweg entlang der Gerade des vorgesehenen Bewegungsablaufs M. Auch die Dimensionierung der Glasplatte selbst wird für die Voxelkarte berücksichtigt.

Ein folgender Optimierungsschritt bestimmt entsprechende Hüllkörper für jede Segment-Kinematikzone separat, welche den von den Voxeln bedeckten Raum vollständig, jedoch so kompakt wie möglich umschließen. Es wird somit separat ein Optimierungsalgorithmus zur Berechnung eines ersten Hüllkörpers für das erste Segment L1, eines zweiten Hüllkörpers für das zweite Segment L2 sowie eines dritten Hüllkörpers für das Flansch-Segment LF durchgeführt. Die jeweiligen Hüllkörper bilden dann Segment-Arbeitszonen je Segment, das heißt den Bereich, aus dem ein Segment oder Teile des Segments jeweils für sich betrachtet nicht hinausragen dürfen. Es wird somit ein mittels einzelner Arbeitszonen segmentierter Arbeitsraum ermittelt.

Als Teilschritt der Optimierung können zudem einzelne Arbeitsraumzonen für bessere Runtime-Performance weiter aufgeteilt und zeitlich versetzt aktiviert werden, oder gegebenenfalls auch zusammengeführt werden. Es kann beispielsweise ermittelt werden, mit wie vielen Körpern eine optimale Auslegung möglich ist, bei einer als Eingangsgröße vorgegebenen maximalen Anzahl an Zonen. Ferner kann geprüft werden, wie Arbeitszonen aussehen, wenn vom Anwender eine feste Anzahl an Zonen vorgegeben wird.

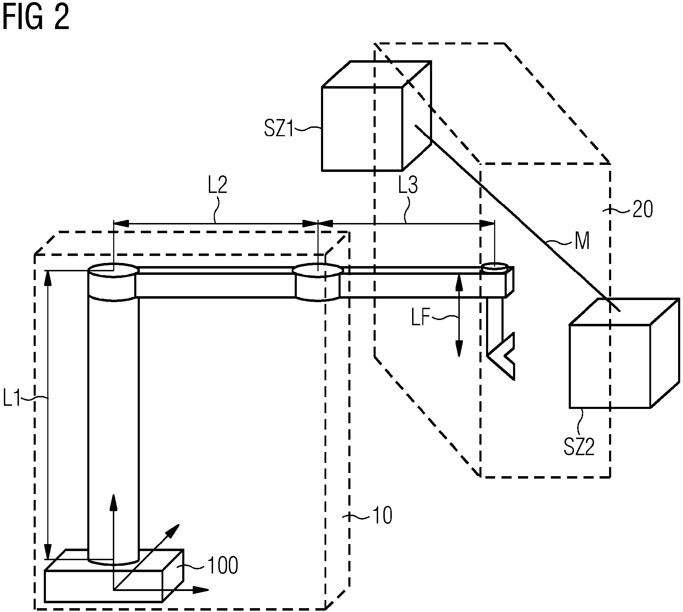

Die Segment-Arbeitszonen sind in Figur 2 dargestellt, wobei für die Bestimmung einer gemeinsamen statischen Basis-Arbeitszone 10 die betroffenen Voxel der beiden Segment-Kinematikzonen 1 und 2 zusammengefasst wurden. Die statische Werkstückarbeitszone 20 ist anhand der aufgrund der von Segment-Kinematikzonen F und der Glasplatte durchkreuzten Voxel bestimmt.

Die Hüllkörper werden dem Anwender angezeigt und dienen als jeweilige Segment-Arbeitszone 10, 20 für die zugehörigen Segment-Kinematikzonen 1, 2, F. Sie werden beispielsweise automatisiert im Sicherheitsprogramm projektiert, sodass eine platzsparende und performance-orientierte Überwachung realisiert werden kann.

Verglichen mit einer manuellen Projektierung des Arbeitsraums ist erkennbar, dass eine große Platzersparnis möglich ist, in diesem Beispiel um ca. 30%. Beispielsweise besteht bei komplexen Arbeitsräumen, beispielsweise bei besonders vielen Freiheitsgraden einer Mehrachskinematik, vorteilhaft eine große Ersparnis und damit große Verbesserung der Performance.

Eine herkömmliche Arbeitszone musste den gesamten durch die Kinematik erreichbaren Raum umfassen, wenn aufwändige händische Modellierungen einer einzigen komplexen Arbeitszone vermieden werden sollten. Beispielsweise bedeutet das im Ausführungsbeispiel, dass die TCP-Bewegung auch bei ausgestrecktem Arm noch innerhalb der Arbeitszone erfolgen müsste, so dass vor allem im äußersten Bereich unnötigerweise Raum als Arbeitsraum belegt ist, der von der Kinematik nicht erreicht werden kann.

Die vorgeschlagene Lösung ermöglicht eine kompaktere Arbeitszone ohne weitere Schutzzonen und damit Performance-Verlust einführen zu müssen. Die beispielhaft gezeigte automatisierte Berechnung und die segmentierte Modellierung des Arbeitsraums mit Segment-Arbeitszonen je dynamischen Zonen-Pendants ermöglichen diese Verbesserung.

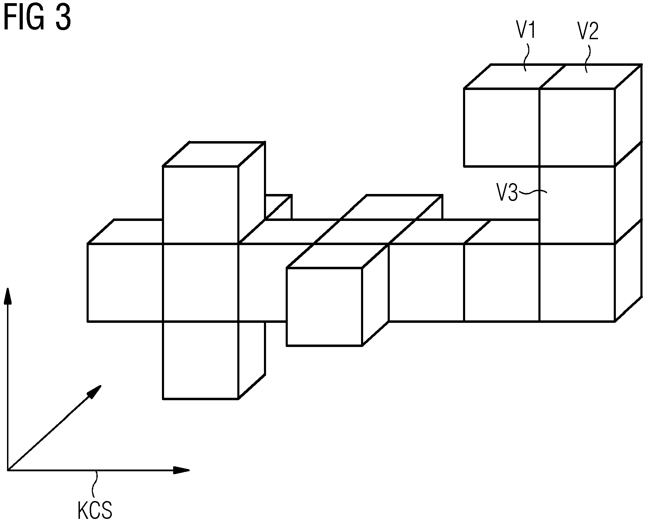

In Figur 3 ist gezeigt, wie von einer einzelnen Segment-Kinematikzone durchkreuzte Raumelemente V1, V2, V3 etc. insgesamt für eine Bewegung eines zu dieser Segment-Kinematikzone zugehörigen Segments ermittelt werden. Das Segment ist gemäß einem zweiten Ausführungsbeispiel der Erfindung beispielsweise ein um mehrere Achsen drehbares Segment eines Knickarmroboters. Die Raumelemente V1, V2, V3, etc. sind beispielsweise graphisch abbildbar und zusammen mit einer jeweiligen Gitterkoordinate, die ihnen in einem Gitternetz des kartesischen Koordinatensystems KCS zukommt, speicherbar.

Für die Bestimmung eines Gesamthüllkörpers über die ermittelten Raumelemente V1, V2, V3 etc. wird beispielsweise ein Optimierungsalgorithmus eingesetzt, der einen konvexen Hüllkörper im kartesischen Raum derart bestimmt, dass alle Raumelemente V1, V2, V3 etc. umfasst sind und das Volumen zugleich minimal ist. Es sind beliebige weitere Vorgaben bei der Optimierung berücksichtigbar, beispielsweise welche geometrischen Grundkörper für den Gesamthüllkörper zu verwenden sind.

Je in einem Anwendungsszenario zu überwachendem Segment mit dessen Segment-Kinematikzone werden die zugehörigen durchkreuzten Raumelemente wie in Figur 3 gezeigt separat ermittelt. Je ermittelter Vielzahl an Raumelementen wird jeweils ein eigener Optimierungsalgorithmus angewendet zur Ermittlung jeweils eines Gesamthüllkörpers zur Festlegung jeweils einer Segment-Arbeitszone.

Obwohl die Erfindung im Detail durch die Ausführungsbeispiele näher illustriert und beschrieben wurde, so ist die Erfindung nicht durch die offenbarten Beispiele eingeschränkt und andere Variationen und Kombinationen können vom Fachmann hieraus abgeleitet werden, ohne den Schutzumfang der Erfindung zu verlassen.

## Patentansprüche

1. Verfahren für eine Projektierung einer sicherheitsgerichteten Überwachung für eine Mehrachskinematik (100) mit mehreren beweglichen Segmenten (L1, L2, L3, LF), aufweisend die folgenden Schritte:
- Zuordnen mehrerer jeweiliger Segment-Kinematikzonen (1, 2, F) zu jeweils einem oder mehreren Segmenten (L1, L2, LF) der Mehrachskinematik (100), wobei die jeweiligen Segment-Kinematikzonen (1, 2, F) durch Segment-Hüllkörper in Abhängigkeit von den jeweiligen Segmenten (L1, L2, LF) gebildet werden,
- Bereitstellen jeweiliger Bewegungen der jeweiligen Segmente im kartesischen Raum,
- Erfassen von aufgrund der bereitgestellten jeweiligen Bewegungen zu durchlaufenden Raumelementen (V1, V2, V3,...) je Segment,
- Ermitteln jeweiliger Gesamt-Hüllkörper als jeweilige Segment-Arbeitszonen (10, 20) je Segment basierend auf den erfassten zu durchlaufenden Raumelementen (V1, V2, V3,...),
- Bereitstellen der jeweiligen Segment-Arbeitszonen (10, 20) für die Projektierung einer Sicherheitsfunktion der sicherheitsgerichteten Überwachung.

2. Verfahren nach Anspruch 1, wobei die jeweiligen Bewegungen der jeweiligen Segmente im kartesischen Raum mittels einer oder mehrerer Trajektorien, die eine Sollbewegung (M) der Mehrachskinematik (100) oder eine Istbewegung der Mehrachskinematik bei einer realen Testfahrt unter gesicherten Bedingungen darstellen, bereitgestellt werden.

3. Verfahren nach Anspruch 1 oder 2, wobei der jeweilige Gesamt-Hüllkörper mittels eines Optimierungsverfahrens in Abhängigkeit von den erfassten zu durchlaufenden Raumelementen (V1, V2, V3) ermittelt wird.

4. Verfahren nach einem der vorstehenden Ansprüche, wobei die zu durchlaufenden Raumelemente (V1, V2, V3) mittels eines Spatial-Hashing-Verfahrens erfasst werden.

5. Verfahren nach einem der vorstehenden Ansprüche, wobei die zu durchlaufenden Raumelemente (V1, V2, V3) mittels einer topologischen Karte oder mittels Punktewolken oder mittels einer Voxel-Karte erfasst werden.

6. Verfahren nach Anspruch 5, wobei die Segment-Hüllkörper durch vorgegebene geometrische Objekte, insbesondere durch Kugeln, Quader oder Kapseln, gebildet werden.

7. Verfahren nach einem der vorstehenden Ansprüche, wobei ein gemeinsamer Gesamt-Hüllkörper als gemeinsame Segment-Arbeitszone für mehrere verschiedene Segmente (L1, L2) basierend auf den erfassten zu durchlaufenden Raumelementen (V1, V2, V3,...) der mehreren verschiedenen Segmente (L1, L2, LF) ermittelt wird.

8. Verfahren nach einem der vorstehenden Ansprüche, wobei die jeweilige Segment-Arbeitszone (10, 20) für eine festgelegte Zeitspanne oder einen festgelegten Bewegungsabschnitt eines Bewegungsablaufs des Mehrachskinematik (100) ermittelt wird.

9. Verfahren nach Anspruch 2, wobei der Trajektorie oder den Trajektorien Bremswege oder Nachlaufwege zugeordnet werden und/oder die zu durchlaufenden Raumelemente (V1, V2, V3,...) je Segment (L1, L2, LF) unter zusätzlicher Berücksichtigung von Bremswegen oder Nachlaufwegen erfasst werden.

10. Verfahren nach einem der vorstehenden Ansprüche, wobei die für die Projektierung bereitgestellten jeweiligen Segment-Arbeitszonen (10, 20) durch die Sicherheitsfunktion aktiviert werden.

11. Verfahren nach Anspruch 8, wobei die für die Projektierung bereitgestellten jeweiligen Segment-Arbeitszonen (10, 20) je Zeitspanne oder je Bewegungsabschnitt durch die Sicherheitsfunktion aktiviert werden.

12. Verfahren nach einem der vorstehenden Ansprüche, wobei für die Projektierung der sicherheitsgerichteten Überwachung zusätzlich Schutzzonen (SZ1, SZ2) vorgegeben werden, die eine oder mehrere der Segment-Arbeitszonen (10, 20) einschränken.

13. Einrichtungskomponente zur Projektierung einer sicherheitsgerichteten Überwachung für eine Mehrachskinematik (100), aufweisend
- Eingabe- und Bedienmittel zum Zuordnen mehrerer jeweiliger Segment-Kinematikzonen (1, 2, F) zu jeweils einem oder mehreren Segmenten (L1, L2, LF) der Mehrachskinematik (100), wobei die jeweiligen Segment-Kinematikzonen (1, 2, F) durch Segment-Hüllkörper in Abhängigkeit von den jeweiligen Segmenten (L1, L2, LF) gebildet werden, und zum Bereitstellen jeweiliger Bewegungen der jeweiligen Segmente (L1, L2, LF) im kartesischen Raum,
- eine Berechnungseinheit zum Erfassen von aufgrund der bereitgestellten jeweiligen Bewegungen zu durchlaufenden Raumelementen (V1, V2, V3,...) je Segment und zum Ermitteln jeweiliger Gesamt-Hüllkörper als jeweilige Segment-Arbeitszonen (10, 20) je Segment basierend auf den erfassten zu durchlaufenden Raumelementen (V1, V2, V3,...), sowie
- Ausgabemittel zum Bereitstellen der jeweiligen Segment-Arbeitszonen (10, 20) für die Projektierung einer Sicherheitsfunktion der sicherheitsgerichteten Überwachung.

14. Einrichtungskomponente nach Anspruch 13, wobei die Ausgabemittel eine Visualisierungseinheit umfassen zur Darstellung der Segment-Arbeitszonen (10, 20).

15. Sicherheitsgerichtete Steuerung zum sicheren Betreiben einer Mehrachskinematik (100), aufweisend einen Sicherheitsfunktionsblock, wobei der Sicherheitsfunktionsblock gemäß dem Verfahren nach einem der Ansprüche 1 bis 12 projektiert ist.
